# EUROPÄISCHE PATENTSCHRIFT

(11) **EP 0 667 482 B1**
(45) Veröffentlichungstag und Bekanntmachung des Hinweises auf die Patenterteilung: **06.05.1999**
(21) Anmeldenummer: 95101945.4
(22) Anmeldetag: 13.02.1995
(51) Int. Cl.: F16L 58/14, F16L 21/03

(54) **Formstück oder Rohr aus Gusseisen oder Stahl**
Branch pipe or pipe made of cast iron or steel
Pièce de branchement ou tuyau en fonte ou acier

(30) Priorität: 14.02.1994 DE 4404650
(43) Veröffentlichungstag der Anmeldung: 16.08.1995
(73) Patentinhaber: EISENWERKE FRIED. WILH. DÜKER GmbH & Co., D-97753 Karlstadt (DE)
(72) Erfinder: Hain, Winfried, Dipl.-Ing., D-97753 Karlstadt (DE); Marschall, Klaus, D-97753 Karlstadt (DE)
(74) Vertreter: Patentanwälte Leinweber & Zimmermann

(56) Entgegenhaltungen:
- CH-A- 124 586
- FR-A- 1 269 188
- FR-A- 2 297 817
- US-A- 1 463 461
- US-A- 3 107 421
- US-A- 3 129 727

## Beschreibung

Die Erfindung bezieht sich auf ein Formstück oder Rohr aus Gußeisen oder Stahl, insbesondere für den WC-Bereich, vorzugsweise in Form eines Rohrbogens oder -stutzens.

An dieser Stelle ist zunächst zu erwähnen, daß es bekannt ist (DE 15 21 645 A, US 3,107,421 A), rohrförmige metallische Gegenstände mit einem glatten Überzug aus Email zu versehen. Dabei ist die Fachwelt bestrebt, die Blasenbildung beim Emaillieren, die sich in der Regel nicht vollständig vermeiden läßt, so weitgehend wie möglich zu unterdrücken, d. h. eine möglichst blasenfreie Deckschicht zu schaffen.

Die großen Schwierigkeiten beim Bestreben, während des Emaillierens eine Blasenbildung zu vermeiden, ergeben sich auch beim Verfahren nach der DE 42 04 873 A, gemäß dem bei der Herstellung von Siloblechen zwei oder drei Emailschichten aufgetragen werden, und zwar jede Schicht separat für sich, ehe sie eingebrannt werden. Es zeigt sich, daß jedes Email und jede Emailschicht zwangsläufig Blasen aufweisen, die notwendig sind, um die Ausdehnung zwischen Stahl und Email zu gewährleisten, mit der Folge, daß bei dem Übereinanderliegen von zwei größeren Blasen während eines Hochspannungstests an dieser Stelle eine Pore geöffnet wird. Wegen der damit verbundenen Nachteile wird bei diesem bekannten Verfahren eine Verbesserung dahingehend angestrebt, daß ein hochbeständiges Siloblech mit einer nahezu porenfreien Emailbeschichtung preisgünstig geschaffen wird. Zu diesem Zweck wird bei dem fraglichen Emaillierverfahren als letzte Deckemailschicht ein Material verwendet, das frei von organischen Zusätzen ist, die beim Brennen der Emaillierung zwangsläufig zu Blasen, d. h. möglicherweise später zu Poren im fertiggestellten Produkt führen könnten. Derartige Blasen würden bei dem bekannten Verfahren in der äußeren Deckschicht nicht auftreten, so daß sich emailliertes Blech mit einer besonders hohen Dichtigkeit bezüglich der Blasenstruktur und eine Emaillierung ergibt, die in besonderem Maße porenfrei ist.

Aus der Literaturstelle "Sprechsaal", 105. Jahrg., S. 432-438 ist die Bildung sog. "Fischschuppen" bekannt, bei denen es sich letztlich auch um Blasen handelt. Bei diesen Fischschuppen gibt der Trägerwerkstoff unterhalb des Transformationspunktes des Emails (Erweichung) noch Gas ab, das in das bereits feste Email diffundiert, dort Druck verursacht, der dann zu den namensgebenden Fischschuppen führt, die im Erscheinungsbild eine Lichtbrechung durch ausgerissenes, in Regenbogenfarben erscheinendes Email herbeiführen.

Bekannte Grauguß-Formstücke oder Rohre der eingangs genannten Art haben gezeigt, daß sie im Vergleich zu Kunststoff-Formstücken mit einer geringeren Schallübertragung und -abstrahlung verbunden sind, was sich insbesondere bei ihrem Einsatz im WC-Bereich günstig auswirkt. Dies ist auf die im Grauguß enthaltenen Graphitlamellen zurückzuführen, die praktisch eine Spiegelung des Schalls und damit eine Schallgwegverlängerung und gleichzeitig auch Absorption eines Teils der Schallenergie und folglich eine Schalldämpfung mit sich bringen. Dennoch gehen von Leitungen mit derartigen Formstücken noch immer störende Geräusche aus.

Der Erfindung liegt die Aufgabe zugrunde, das Formstück bzw. Rohr der eingangs genannten Art so weiter auszubilden, daß die erwähnten störenden Geräusche weitgehend ausgeschaltet sind.

Das Formstück oder Rohr, bei dem diese Aufgabe gelöst ist, zeichnet sich im wesentlichen dadurch aus, daß auf die Formstück- bzw. Rohr-Innenwand ein glatter Überzug aus Email mit einer Vielzahl eingelagerter Blasen in einer so dichten Anordnung und Verteilung aufgebracht ist, daß praktisch jede quer durch die Emailschicht gelegte Gerade durch mindestens drei Blasen verläuft. Diese auf Gasentwicklung zurückzuführenden Blasen, an denen ein Dichtewechsel vorliegt, wirken ähnlich wie die Graphitlamellen im Grauguß des Formstücks bzw. Rohrs, auf das der Emailüberzug aufgebracht ist, nämlich im Sinne einer Ablenkung der Schallwellen, so daß auch in der Emailschicht Schallwellenenergie vernichtet wird. Infolgedessen kommt es zu einer beträchtlichen Reduzierung des Schalltransports und der Schallabstrahlung, was insbesondere im Hinblick auf die geltenden Schallschutznormen bei Einsatz der Formstücke bzw. Rohre im WC-Bereich von erheblichem Vorteil ist. Diese Tatsache ist vor allem deshalb überraschend, weil die Emailschicht im Verhältnis zur Wandstärke des Formstücks bzw. Rohrs relativ klein ist. Dies erklärt sich aus der Tatsache, daß mit zunehmendem Dichteunterschied in dem den Schall leitenden Material der Formstücke oder Rohre auch die Wirksamkeit der Reflexionen wächst. Die Reflexionen durch Graphitlamellen im Grauguß von Formstücken oder Rohren sind deshalb nicht so effektiv gegenüber denen an Blasen im Email, weil Graphitlamellen eine Dichte besitzen, die von der des Eisens nicht so stark abweicht wie die Dichte von Blasen im Vergleich zu derjenigen des die Blasen umgebenden Emails.

Als sehr zweckmäßig hat es sich erwiesen, wenn die die Blasen enthaltende Emailschicht eine Schichtdicke von mindestens 0,3 mm, vorzugsweise etwa 0,5 mm besitzt. Zweckmäßigerweise sind in der Emailschicht Blasen unterschiedlicher Größe, vorzugsweise bis zu einem Durchmesser von etwa 0,12 mm enthalten.

In weiterer Ausbildung des Formstücks oder Rohrs, in das ein Rohrstutzen einschiebbar ist, ist erfindungsgemäß eine den Rohrstutzen aufnehmende, so ausgebildete Anschlußmuffe vorgesehen, daß die Formstück- bzw. Rohrinnenkontur unmittelbar angrenzend an den Bereich der Anschlußmuffe der Innenkontur des in die Anschlußmuffe eingeschobenen Rohrstutzens entspricht. Auf diese Weise sind stufenförmige Querschnittsänderungen beim Übergang vom Rohrstutzen zum Formstück bzw. Rohr vermieden, und es kommt nicht mehr zu einer Ablösung des strömenden Wassers von der Wandung mit anschließendem freien Fall und daraus resultierender Erzeugung von Geräuschen. Das Wasser strömt vielmehr praktisch geräuschlos an der Rohrstutzen- und Formstück- bzw. Rohrwandung entlang, ohne daß es in der Übergangszone zu einer Ablösung, einem freien Fall und/oder einer Verwirbelung und dabei Geräuschbildung kommt.

Es hat sich nun in vorteilhafter weiterer Ausgestaltung des rohrbogenförmigen Formstücks bzw. Rohrs als günstig erwiesen, wenn der normalerweise runde Querschnitt des Formstücks bzw. Rohrs in der Übergangszone von einem horizontalen Zulaufbereich zu einem vertikalen Ablaufbereich kontinuierlich in einen etwa gleich großen ovalen Querschnitt übergeht, dessen kürzere, horizontale Achse in bezug auf die Achse des Zulaufbereichs mit rundem Querschnitt nach unten versetzt ist und dessen längere, vertikale Achse in bezug auf die Achse des vertikalen Ablaufbereichs mit rundem Querschnitt derart seitlich versetzt ist, daß das übertretende Wasser etwa tangential an die Innenwand des Ablaufbereichs herangeführt wird. Auf diese elegante Weise wird sichergestellt, daß das Wasser nicht wie bei herkömmlichen bogenförmigen Formstücken bzw. Rohren mit gleichbleibendem runden Querschnitt nach dem Übertritt in den vertikalen Ablaufbereich abwärts fällt und zu erheblichen Geräuschentwicklungen führt. Es fließt vielmehr, nachdem es an die Wand des vertikalen Ablaufbereichs tangential herangeführt worden ist, an letzterer nahezu geräuschlos abwärts.

In besonders zweckmäßiger weiterer Ausgestaltung der Erfindung ist das Formstück bzw. Rohr gekennzeichnet durch Ausbildung als T-Stück, bei dem der seitliche Anschluß als Zulaufbereich mit der in die ovale Querschnittsform übergehenden Übergangszone ausgeführt ist. Ein derartiges T-Stück führt bei Einsatz in eine Abwasser-Falleitung, die mehrere Stockwerke entsorgt, zu einer wesentlichen Geräuschminderung.

Die erfindungsgemäß angestrebte Unterdrückung der Schalleitung und -abstrahlung wird in weiterer vorteilhafter Ausbildung dadurch begünstigt, daß im Bereich der Formstück-bzw. Rohrmuffe eine Dichtungsmanschette aus einem Elastomer vorgesehen ist, die sich über die gesamte Länge der Muffe erstreckt und dadurch sicherstellt, daß das in die Formstück-bzw. Rohrmuffe eingeschobene Rohrstutzenende nicht mit der Muffe in direkte Berührung gelangt, um so Körperschallübertragung auszuschalten.

Zweckmäßigerweise ist diese Dichtungsmanschette so ausgebildet, daß das stirnseitige Ende des Rohrstutzens nach dem Einschieben in die Formstück- bzw. Rohrmuffe an der sich an dem Muffenboden abstützenden Dichtungsmanschette anliegt. Auch in diesem Bereich kann es folglich nicht mehr zu einer Körperschallübertragung kommen.

Der bei herkömmlichen Ausführungen zum Zwecke der Abdichtung vorgesehene, in eine Ringnut der Formstück- bzw. Rohrmuffe eingelagerte Dichtungsring ist zweckmäßigerweise nunmehr als integraler Bestandteil der Dichtungsmanschette ausgebildet. Als sehr günstig hat es sich dabei erwiesen, wenn der Dichtungsring etwa U-förmigen Querschnitt besitzt und sich an seine beiden Schenkel, die in radial zur Ringachse gerichtete Dichtungslippen auslaufen, jeweils ein Abschnitt der Dichtungsmanschette unmittelbar anschließt.

Weitere Einzelheiten, Vorteile und Merkmale der Erfindung ergeben sich aus der folgenden Beschreibung anhand der beigefügten Zeichnungen. Es zeigen:
- Fig. 1: einen Längsschnitt durch ein als Rohrbogen ausgeführtes Formstück mit in seine Anschlußmuffe eingeschobenem Rohrstutzen,
- Fig. 2: einen Ausschnitt, nämlich das Detail Z der Fig. 1 in doppeltem Maßstab,
- Fig. 3: eine sehr schematische Seitenansicht eines als T-Stück ausgeführten Formstücks, teilweise im Schnitt, in kleinerem Maßstab,
- Fig. 4: eine Vorderansicht des T-Stücks nach Fig. 3,
- Fig. 5: eine Draufsicht auf das T-Stück nach Fig. 3 und
- Fig. 6: ein Schliffbild durch die Emailschicht und einen Teil des die Schicht tragenden Formstückwandbereichs, in etwa 120-facher Vergrößerung.

In der Zeichnung ist das Formstück 1 dargestellt, das durch einen Rohrbogen gebildet ist, jedoch statt dessen auch in Form eines geraden Rohrstutzens ausgeführt sein kann. Das Formstück 1 ist mit einer Anschlußmuffe 2 versehen, in die beispielsweise ein Rohrstutzen 3 einschiebbar ist, der im veranschaulichten Beispiel aus Kunststoff besteht und bei bevorzugtem Einsatz dem Anschluß einer nicht dargestellten WC-Schlüssel dient. Unmittelbar angrenzend an den Bereich der Anschlußmuffe 2 entspricht die Formstückinnenkontur 4 der Innenkontur 5 des in die Anschlußmuffe 2 eingeschobenen Rohrstutzens 3, d.h. die Konturen sind so aufeinander abgestimmt, daß das durchfließende Wasser beim Übergang vom Rohrstutzen 3 in das Formstück 1 keinen Geräusche erzeugenden zwangsweisen Durchwirbelungen unterworfen ist. Es wird vielmehr in diesem Bereich so geführt, daß es sich von der Formstückwand nicht abhebt, sondern vielmehr an ihr gleichmäßig entlang fließt.

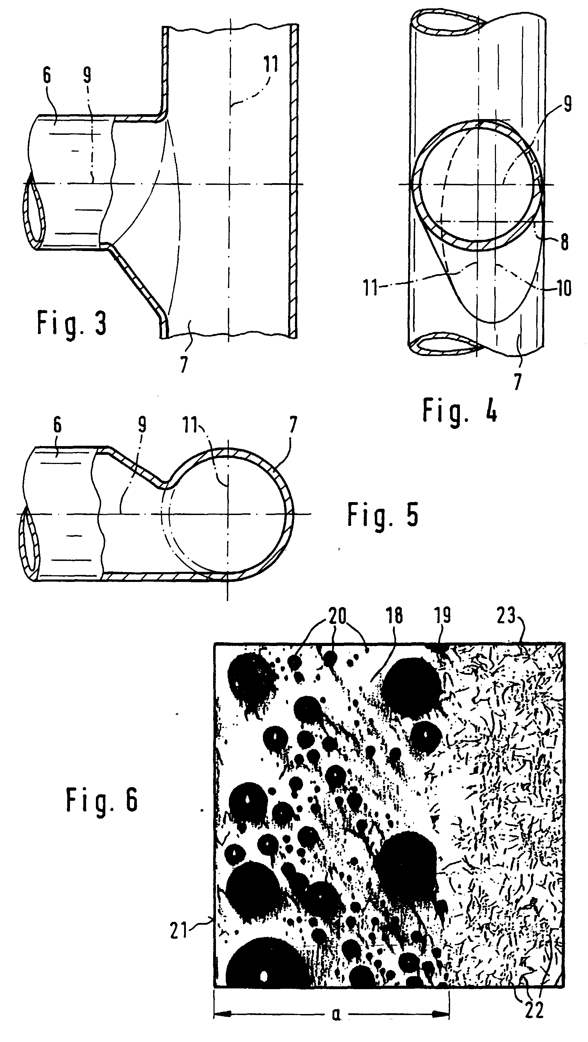

Eine gleichförmige Fließbewegung wird auf in den Fig. 3 bis 5 näher veranschaulichte Weise dadurch weiter gefördert, daß der runde Querschnitt des Formstücks 1 in der Übergangszone von einem horizontalen Zulaufbereich 6 zu einem vertikalen Ablaufbereich 7 kontinuierlich in einen etwa gleich großen ovalen Querschnitt übergeht. Die kürzere, horizontale Achse 8 ist dabei in Bezug die Achse 9 des Zulaufbereichs 6 mit rundem Querschnitt nach unten versetzt. Fig. 4 zeigt auch deutlich, daß gleichzeitig die längere, vertikale Achse 10 der Übergangszone mit ovalem Querschnitt in Bezug auf die Achse 11 des vertikalen Ablaufbereichs 7 mit rundem Querschnitt derart seitlich versetzt ist, daß das übertretenden Wasser etwa tangential an die Innenwand des Ablaufbereichs 7 herangeführt wird. Bei der in den Fig. 3 bis 5 gezeigten Ausführungsform kann es sich um ein Formstück in Form eines Rohrbogens handeln; gezeigt ist jedoch ein bevorzugtes Formstück, das als T-Stück ausgeführt ist. Wie ersichtlich, ist bei diesem T-Stück der seitliche Anschluß als Zulaufbereich 6 mit der in die ovale Querschnittsform übergehenden Übergangszone ausgeführt.

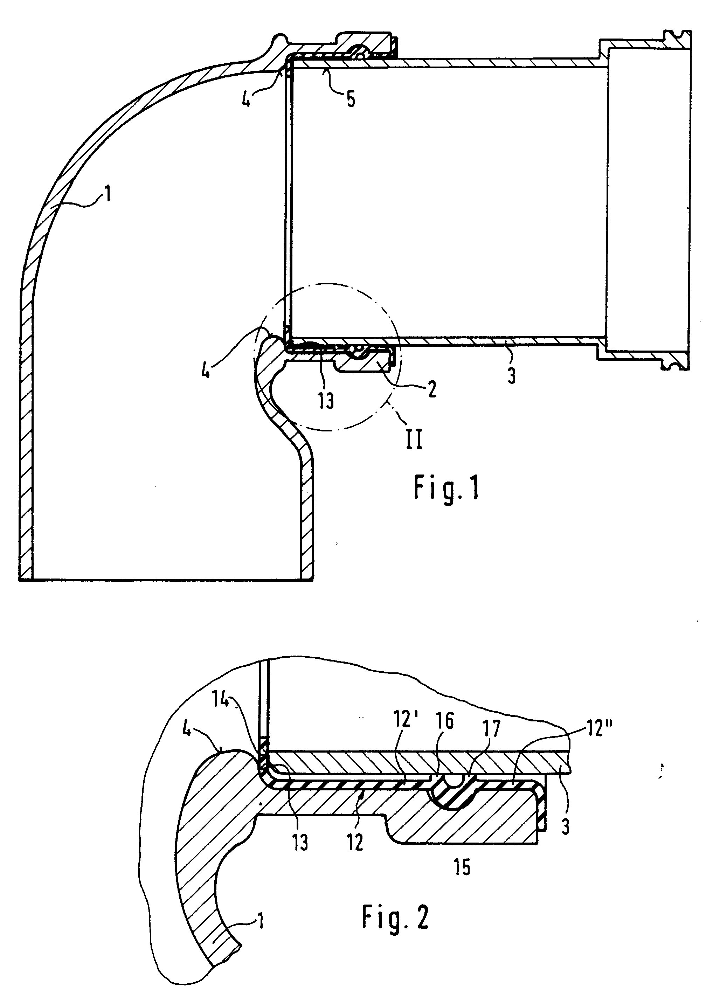

Um sicherzustellen, daß etwaige Schallwellen, die in den Rohrstutzen 3 eingeleitet werden, möglichst nicht durch Körperschallübertragung in das Formstück 1 gelangen, ist im Bereich der Formstückmuffe 1 eine Dichtungsmanschette 12 aus einem Elastomer vorgesehen, die sich über die gesamte Länge der Muffe 2 erstreckt. Auf diese Weise ist sichergestellt, daß das in die Formstückmuffe 1 eingeschobene Rohrstutzenende nicht mit der Muffe 2 in direkte Berührung gelangt, um so Körperschallübertragung auszuschalten. Die Anschlußmuffe 2 weist innenseitig eine einen Muffenboden 13 bildende Stufe auf. Wie aus den Fig. 1 beziehungsweise 2 ersichtlich, ist die Dichtungsmanschette 12 so ausgebildet, daß das stirnseitige Ende 14 beim Einschieben des Rohrstutzens 3 nicht unmittelbar an dem Muffenboden 13 zur Anlage gelangen kann, sondern vielmehr nur an der sich am Muffenboden 13 abstützenden Dichtungsmanschette 12.

Bei herkömmlichen Ausführungen von Rohrbögen gab es bereits etwa O-Ring-artige, in entsprechenden Ringnuten einer Anschlußmuffe gelagerte Dichtungsringe mit einer einseitigen Nut. Bei der erfindungsgemäßen Ausführung hat es sich als vorteilhaft erwiesen, wenn ein derartiger Dichtungsring 15 als integraler Bestandteil der Dichtungsmanschette 12 ausgebildet ist. Aufgrund der erwähnten einseitigen Ringnut besitzt der Dichtungsring 15 einen etwa U-förmigen Querschnitt und seine beiden Schenkel 16, 17 laufen in Dichtungslippen aus. An diese beiden Schenkel 16, 17 schließt sich jeweils ein Abschnitt 12' und 12'' der Dichtungsmanschette 12 unmittelbar an.

Auf aus den Fig. 1 bis 5 nicht ersichtliche, jedoch bekannte Weise ist das Formstück 1 außenseitig mit einer dem Korrosionsschutz dienenden äußeren Grundemaillierung (Naßemail) einer Schichtdicke von 0,07 bis 0,15 mm versehen. Innenseitig ist über eine dünne Grundemallierung (Naßemail) eine relativ dicke Schicht einer Deckemaillierung (Naßemail) blau aufgetragen, so daß sich eine Emailschicht 18 einer Schichtdicke von 0,3 bis 0,6 mm, vorzugweise etwa 0,5 mm ergibt. Aus dem Schliffbild der Fig. 6 geht das Charakteristikum dieser Emailschicht 18 besonders anschaulich hervor, und zwar die Tatsache, daß Blasen 20, die während des Emailliervorgangs der Grauguß-Formstück-Innenwand -Innenwand 19 entstanden sind in dieser Emailschicht 18 bei ihrem Erstarren fixiert sind. Erfindungsgemäß wird nämlich die an sich bekannte ("Petzold Pöschmann" Email und Emailliertechnik, Deutscher Verlag für Grundstoffindustrie, Leipzig, Stuttgart), in der Regel unerwünschte, oft nicht völlig vermeidbare Blasenbildung gezielt ausgenutzt. Dabei wird einerseits der Übertritt von Gasen aus dem zu beschichtenden Eisen ebenso wie der Eintritt der üblicherweise in der Grenzschicht vorhandenen, beziehungsweise entstehenden Gase in die Emailschicht 18 gefördert und andererseits die bekannte Freigabe von Gasen infolge von physikalischen/chemischen Reaktionen zwischen den das Email bildenden Stoffen ausgenutzt und durch Temperatursteuerung der Emailbeschichtung dafür gesorgt, daß die Gase in Form der Blasen 20 während des Erstarrens im Email eingeschlossen bleiben und dennoch eine glatte Emailoberfläche 21 entsteht.

Diese im Email eingeschlossenen Blasen 20 weisen im Vergleich zum Email eine sehr geringe Dichte auf. Sie stellen deshalb für durch das Email transportierte Schallwellen ein dementsprechend großes Hindernis dar. Die Schallwellen werden folglich vielfach in der Emailschicht 18 abgelenkt, so daß schließlich der größte Teil der Schallenergie absorbiert wird, ehe nach einem Schalltransport eine für die Umgebung störende Schallabgabe von der Oberfläche des Formstücks erfolgen kann.

Das Schliffbild der Fig. 6 läßt im übrigen auch deutlich die vorerwähnten Graphitlamellen 22 in der Grauguß-Formstückwandung 23 erkennen.

Das fragliche Schliffbild zeigt die Strukturverhältnisse mit etwa 120-facher Vergrößerung, dies ergibt sich aus der Tatsache, daß die mit a veranschaulichte Dicke der Emailschicht 18 zwischen der Grauguß-Innenfläche 19 des Rohrstücks und der Emailschichtoberfläche 21 in der Wirklichkeit bei etwa 0,5 mm liegt. Dementsprechend besitzt die größte im Schliffbild zu sehende Blase einen Durchmesser von etwa 0,12 mm.

## Patentansprüche

1. Formstück oder Rohr aus Gußeisen oder Stahl, insbesondere für den WC-Bereich, vorzugsweise in Form eines Rohrbogens oder -stutzens, dadurch gekennzeichnet, daß auf die Formstückbzw. Rohr-Innenwand (19) ein glatter Überzug (18) aus Email mit einer Vielzahl eingelagerter Blasen (20) in einer so dichten Anordnung und Verteilung aufgebracht ist, daß praktisch jede quer durch die Emailschicht (18) gelegte Gerade durch mindestens drei Blasen verläuft.

2. Formstück oder Rohr nach Anspruch 1, dadurch gekennzeichnet, daß die die Blasen (20) enthaltende Emailschicht (18) eine Schichtdicke von mindestens 0,3 mm, vorzugsweise etwa 0,5 mm besitzt.

3. Formstück oder Rohr nach Anspruch 1 oder 2, dadurch gekennzeichnet, daß in der Emailschicht (18) Blasen (20) unterschiedlicher Größe, vorzugsweise bis zu einem Durchmesser von etwa 0,12 mm enthalten sind.

4. Formstück oder Rohr nach einem der Ansprüche 1 bis 3, in das ein Rohrstutzen (3) einschiebbar ist, dadurch gekennzeichnet, daß eine den Rohrstutzen (3) aufnehmende Anschlußmuffe (2) vorgesehen ist und daß die Formstück- bzw. Rohrinnenkontur unmittelbar angrenzend an den Bereich der Anschlußmuffe (2) der Innenkontur des in die Anschlußmuffe eingeschobenen Rohrstutzens (3) entspricht.

5. Formstück oder Rohr nach Anspruch 4, dadurch gekennzeichnet, daß der runde Querschnitt des Formstücks (2) bzw. Rohrs in der Übergangszone von einem horizontalen Zulaufbereich (6) zu einem vertikalen Ablaufbereich (7) kontinuierlich in einen etwa gleich großen ovalen Querschnitt übergeht, dessen kürzere, horizontale Achse (8) in bezug auf die Achse (9) des Zulaufbereichs (6) mit rundem Querschnitt nach unten versetzt ist und dessen längere, vertikale Achse (10) in bezug auf die Achse (11) des vertikalen Ablaufbereichs (7) mit rundem Querschnitt derart seitlich versetzt ist, daß das übertretende Wasser etwa tangential an die Innenwand des Ablaufbereichs (7) herangeführt wird.

6. Formstück oder Rohr nach Anspruch 5, gekennzeichnet durch Ausbildung als T-Stück, bei dem der seitliche Anschluß als Zulaufbereich (6) mit der in die ovale Querschnittsform übergehenden Übergangszone ausgeführt ist.

7. Formstück oder Rohr nach einem der Ansprüche 4 bis 6, dadurch gekennzeichnet, daß im Bereich der Formstück- bzw. Rohrmuffe (1) eine Dichtungsmanschette (12) aus einem Elastomer vorgesehen ist, die sich über die gesamte Länge der Muffe (2) erstreckt und dadurch sicherstellt, daß das in die Formstückmuffe eingeschobene Rohrstutzenende nicht mit der Muffe in direkte Berührung gelangt, um so Körperschallübertragung auszuschalten.

8. Formstück oder Rohr nach Anspruch 7, gekennzeichnet durch solche Ausbildung der Dichtungsmanschette (12), daß das stirnseitige Ende (14) des Rohrstutzens (3) nach dem Einschieben in die Formstück- bzw. Rohrmuffe (2) an der sich an dem Muffenboden (13) abstützenden Dichtungsmanschette (12) anliegt.

9. Formstück oder Rohr nach einem der Ansprüche 7 oder 8, mit einem in eine Ringnut der Formstück- bzw. Rohrmuffe eingelagerten Dichtungsring (15), dadurch gekennzeichnet, daß der Dichtungsring (15) als integraler Bestandteil der Dichtungsmanschette (12) ausgebildet ist.

10. Formstück oder Rohr nach Anspruch 9, dadurch gekennzeichnet, daß der Dichtungsring (15) etwa U-förmigen Querschnitt besitzt und sich an seine beiden Schenkel (16, 17), die in radial zur Ringachse gerichtete Dichtungslippen auslaufen, jeweils ein Abschnitt (12', 12'') der Dichtungsmanschette (12) unmittelbar anschließt.

## Claims

1. Branch pipe or pipe made of cast iron or steel, in particular for the WC area, preferably in the form of a pipe bend or pipe socket, characterized in that there is applied onto the branch pipe or pipe inner wall (19) a smooth coating (18) of enamel having a large number of incorporated bubbles (20) of such a dense arrangement and distribution that practically any straight line drawn transversely through the enamel layer (18) passes through at least three bubbles.

2. Branch pipe or pipe according to claim 1, characterized in that the enamel layer (18) containing the bubbles (20) has a layer thickness of at least 0.3 mm, preferably around 0.5 mm.

3. Branch pipe or pipe according to claim 1 or 2, characterized in that bubbles (20) of differing size, preferably up to a diameter of around 0.12 mm, are contained in the enamel layer (18).

4. Branch pipe or pipe according to one of claims 1 to 3, into which a pipe socket (3) is insertable, characterized in that a connecting sleeve (2) for receiving the pipe socket (3) is provided and that the inner contour of the branch pipe or pipe immediately adjacent to the region of the connecting sleeve (2) corresponds to the internal contour of the pipe socket (3) inserted into the connecting sleeve.

5. Branch pipe or pipe according to claim 4, characterized in that the round cross section of the branch pipe (2) or pipe in the transition zone from a horizontal inlet region (6) to a vertical outlet region (7) changes continuously into an approximately equally large oval cross section, the shorter horizontal axis (8) of which is offset in a downward direction in relation to the axis (9) of the inlet region (6) with a round cross section and the longer vertical axis (10) of which is offset laterally in relation to the axis (11) of the vertical outlet region (7) with a round cross section in such a way that the water passing through is conveyed substantially tangentially towards the inner wall of the outlet region (7).

6. Branch pipe or pipe according to claim 5, characterized by its design as a T-piece, in which the lateral connection is designed as an inlet region (6) having the transition zone verging into the oval cross-sectional shape.

7. Branch pipe or pipe according to one of claims 4 to 6, characterized in that there is provided in the region of the branch pipe or pipe connecting sleeve (1) a packing (12) made of an elastomer, which extends over the entire length of the connecting sleeve (2) and thereby prevents the pipe socket end inserted into the branch pipe connecting sleeve from coming into direct contact with the connecting sleeve, thereby eliminating the transmission of structure-borne noise.

8. Branch pipe or pipe according to claim 7, characterized by such a design of the packing (12) that the front end (14) of the pipe socket (3), after insertion into the branch pipe or pipe connecting sleeve (2), rests against the packing (12), which is supported against the connecting sleeve base (13).

9. Branch pipe or pipe according to one of claims 7 or 8, having a sealing ring (15) inserted into an annular groove of the branch pipe or pipe connecting sleeve, characterized in that the sealing ring (15) is designed as an integral part of the packing (12).

10. Branch pipe or pipe according to claim 9, characterized in that the sealing ring (15) has a substantially U-shaped cross section and immediately adjoining each of its two limbs (16, 17), which run out into sealing lips directed radially relative to the ring axis, is a respective portion (12', 12") of the packing (12).

## Revendications

1. Pièce de forme ou tube en fonte ou en acier, en particulier destiné au domaine des W.-C., se présentant de préférence sous forme d'un tube courbe ou d'un embout tubulaire, caractérisé en ce que sur la paroi intérieure (19) de la pièce de forme ou du tube, est appliqué un revêtement lisse (18) en émail comportant une pluralité de bulles incorporées (20), disposées et réparties de façon si serrée que pratiquement toute droite placée transversalement à la couche d'émail (18) passe par au moins trois bulles.

2. Pièce de forme ou tube selon la revendication 1, caractérisé en ce que la couche d'émail (18) contenant les bulles (20) a une épaisseur d'au moins 0,3 mm, de préférence approximativement 0,5 mm.

3. Pièce de forme ou tube selon la revendication 1 ou 2, caractérisé en ce que dans la couche d'émail (18) sont contenues des bulles (20) de différentes dimensions, allant de préférence jusqu'à un diamètre d'environ 0,12 mm.

4. Pièce de forme ou tube selon l'une des revendications 1 à 3, dans lequel peut être enfilé un embout tubulaire (3), caractérisée en ce qu'un manchon de raccordement (2), recevant l'embout tubulaire (3) est prévu et que le contour intérieur de la pièce de forme ou du tube, correspond, à la limite immédiate de la zone du manchon de raccordement (2), au contour intérieur de l'embout (3) enfilé dans le manchon de raccordement.

5. Pièce de forme ou tube selon la revendication 4, caractérisé en ce que la section transversale ronde de la pièce de forme (2), ou du tube, se transforme de façon continue, dans la zone de transition allant d'une zone d'entrée horizontale (6) à une zone d'écoulement verticale (7) en une section transversale ovale d'une dimension approximativement égale, dont l'axe horizontal court (8) est décalé vers le bas par rapport à l'axe (9) de la zone d'entrée (6) de section transversale ronde, et dont l'axe vertical long (10) est décalé par rapport à l'axe (11) de la zone d'écoulement verticale (7) de section transversale ronde, de façon telle que l'eau en transit est amenée approximativement tangentiellement contre la paroi intérieure de la zone d'écoulement (7).

6. Pièce de forme ou tube selon la revendication 5, caractérisé par une conformation de pièce en T, dans laquelle le raccord latéral est réalisé en tant que zone d'entrée (6), avec la zone de transition se transformant en la forme ovale de section transversale.

7. Pièce de forme ou tube selon l'une des revendications 4 à 6, caractérisé en ce qu'est prévue, dans la zone du manchon de la pièce de forme, ou du manchon tubulaire (1), une manchette d'échanchéité (12) réalisée en un élastomère, qui s'étend sur toute la longueur du manchon (2) et qui garantit ainsi que l'extrémité de l'embout tubulaire enfilé dans le manchon de la pièce de forme ne vient pas en contact direct avec le manchon, pour de cette façon exclure une conduction du son par les corps.

8. Pièce de forme ou tube selon la revendication 7, caractérisé par une conformation de la manchette d'étanchéité (12) telle que l'extrémité (14) du côté frontal de l'embout tubulaire (3) est en appui, après l'enfilage dans le manchon de la pièce de forme ou du manchon tubulaire (2) sur la manchette d'étanchéité (12), en appui sur le fond (13) du manchon.

9. Pièce de forme ou tube selon l'une des revendications 7 ou 8, comportant un joint annulaire (15) installé dans une rainure annulaire du manchon de la pièce de forme ou du manchon tubulaire, caractérisé en ce que le joint annulaire (15) est une partie constitutive formant une seule pièce avec la manchette d'étanchéité (12).

10. Pièce de forme ou tube selon la revendication 9, caractérisé en ce que le joint annulaire (15) a une section transversale approximativement en forme de U et qu'une partie (12', 12") de la manchette d'étanchéité se raccorde directement à chacune de ses deux branches (16, 17) qui se terminent par des lèvres d'étanchéité orientées radialement par rapport à l'axe du joint annulaire.
